# EUROPÄISCHE PATENTSCHRIFT

(11) **EP 3 431 314 B1**
(45) Veröffentlichungstag und Bekanntmachung des Hinweises auf die Patenterteilung: **01.06.2022**
(21) Anmeldenummer: 18181097.9
(22) Anmeldetag: 02.07.2018
(51) Int. Cl.: B60H 1/22, B60W 20/00, H02P 29/64, H02P 29/62, B60H 1/14, B60H 1/00, H02P 29/68

(54) **STANDHEIZUNG**
AUXILIARY HEATER
CHAUFFAGE D'APPOINT

(30) Priorität: 17.07.2017 DE 102017212191
(43) Veröffentlichungstag der Anmeldung: 23.01.2019
(73) Patentinhaber: AUDI AG, 85045 Ingolstadt (DE)
(72) Erfinder: Hartmann, Matthias, 85092 Kösching (DE); Schobeß, Nico, 85080 Gaimersheim (DE); Hammam, Mohamed, 85051 Ingolstadt (DE)

(56) Entgegenhaltungen:
- WO-A1-03/060296
- DE-A1- 19 649 710
- DE-A1-102011 004 624
- DE-A1-102012 208 419

## Beschreibung

Die Erfindung betrifft eine Standheizung für von Elektromotoren angetriebene Kraftfahrzeuge und ein Verfahren zur Realisierung einer Standheizungsfunktion in einem Kraftfahrzeug mit einem elektrischen Antriebsstrang.

Die Funktion Standheizung wird als Sonderausstattung für Kraftfahrzeuge mit Verbrennungsmotor angeboten. Für diese Funktion wird beispielsweise Kraftstoff in eigens dafür verbauter Hardware verbrannt und mit der erzeugten Wärme der Innenraum und die Verbrennungskraftmaschine des Fahrzeugs beheizt. Die erforderliche zusätzliche Hardware führt jedoch zu Mehrkosten, höherem Gewicht und Bauraumbedarf.

Es sind bereits verschiedene Alternativen zu herkömmlichen Standheizungen vorgeschlagen worden, die in Elektro- oder Hybridfahrzeugen eingesetzt werden können.

Dokument DE 10 2012 208 419 A1 offenbart die Aufheizung eines Kühlmittelkreislaufs mittels der Verlustleistung einer elektrischen Maschine.

Aus der DE 10 2014 112 201 A1 sind ein Verfahren und eine Vorrichtung zum Steuern eines Abwärmemanagements eines Fahrzeugs bekannt. Dabei wird von Elektronikkomponenten eines Hybridfahrzeugs erzeugte Abwärme für eine Standheizung des Hybridfahrzeugs genutzt.

Die DE 10 2009 028 330 A1 offenbart ein Verfahren und eine Vorrichtung zum Temperieren eines Fahrzeuginnenraums, bei dem der Innenraum durch die Abwärme eines Ladegeräts zum Laden einer Fahrzeugbatterie eines Hybridfahrzeugs oder die Abwärme der Fahrzeugbatterie erwärmt wird.

Aus der EP 2 556 983 A1 gehen ein Verfahren zum Aufladen eines Akkumulators mit Hilfe eines Energierückgewinnungssystems und eine Antriebseinheit für ein Elektro- oder Hybridfahrzeug hervor. Ein Teil von mittels Energierückgewinnung generierter elektrischer Energie wird in Nutzwärme für eine Standheizung umgewandelt.

Die Aufgabe der Erfindung bestand darin, eine alternative Standheizung für Kraftfahrzeuge mit einem elektrischen Antriebsstrang zur Verfügung zu stellen, für die keine zusätzlichen Heizkomponenten wie z.B. Brenner oder Heizwiderstände benötigt werden.

Die Aufgabe wurde dadurch gelöst, dass die Standheizungsfunktion von einem Elektromotor übernommen wird. In Fahrzeugen mit einem elektrischen Antriebsstrang sind ausreichend leistungsstarke Elektromotoren verbaut und ohnehin an das Kühlwassersystem angebunden. Erfindungsgemäß werden beim Betrieb der E-Maschine, anders als beim normalen Betrieb, die Verlustleistung maximiert und das resultierende Drehmoment minimiert. Gegenstand der Erfindung ist ein Standheizungssystem für ein Kraftfahrzeug mit einem elektrischen Antriebsstrang gemäß Anspruch 1.

Das Standheizungssystem umfasst mindestens einen Elektromotor, der an einen Kühlmittelkreislauf des Kraftfahrzeugs angeschlossen ist, einen Verlustleistungsbeobachter, der dafür eingerichtet ist, einen Istwert der Verlustleistung P_{VIst} des Elektromotors zu ermitteln, und einen Verlustleistungsregler, der dafür eingerichtet ist, die Verlustleistung P_{V} des Elektromotors auf einen Sollwert P_{VSoll} hin zu regeln. In einer Ausführungsform wird der Istwert P_{VIst} in einem Verlustleistungsbeobachter über einen modellbasierten Ansatz unter Verwendung von Motor- und Endstufenparametern ermittelt, wobei gemessene oder geschätzte Temperaturen im Stator und/oder Inverter des Elektromotors, Volumenströme im Kühlmittelkreislauf und die gemessenen Ströme der Regelung verwendet werden können.

Erfindungsgemäß ist der Verlustleistungsbeobachter daher dafür eingerichtet, gemessene oder geschätzte Temperaturen im Stator und/oder Pulswechselrichter (Inverter) des Elektromotors und Volumenströme im Kühlmittelkreislauf und in dem vom Verlustleistungsregler geregelten Stromkreis gemessene Ströme zu verarbeiten.

Erfindungsgemäß umfasst das Standheizungssystem weiterhin eine Lookup-Tabelle, eine feldorientierte Antriebsregelung, eine Modulationseinheit und eine Endstufe. Gemäß dem in Anspruch 6 beanspruchten Verfahren werden über die Lookup-Tabelle einer Modulationseinheit und einer nachgeschalteten Endstufe Ströme so vorgegeben, dass passend zum Ausgangswert des Verlustleistungsreglers maximale Verluste entstehen.

In einer Ausführungsform ist das Kraftfahrzeug ein batterieelektrisches Fahrzeug (BEV). In einer anderen Ausführungsform umfasst das Kraftfahrzeug mindestens einen Verbrennungsmotor. In einer weiteren Ausführungsform ist das Kraftfahrzeug ein Plug-in Hybridfahrzeug (PHEV), ein Hybridelektrofahrzeug (HEV) oder ein Mildhybridelektrofahrzug (MHEV). In einer Ausführungsform ist das erfindungsgemäße Standheizungssystem an einen Kühlmittelkreislauf eines Verbrennungsmotors des Kraftfahrzeugs angeschlossen.

Gegenstand der Erfindung ist auch ein Verfahren gemäß Anspruch 6 zum Erhitzen eines Kühlmittels in einem Kühlmittelkreislauf eines Kraftfahrzeugs mit einem elektrischen Antriebsstrang, welcher mindestens einen Elektromotor, der an den Kühlmittelkreislauf angeschlossen ist, umfasst. Das Verfahren umfasst das Betreiben mindestens eines Elektromotors an einem Betriebspunkt, an dem die Verlustleistung des Elektromotors maximiert und das resultierende Drehmoment des Elektromotors minimiert werden. Die dadurch entstehende Wärme wird über den Kühlmittelkreislauf abgeführt und erhitzt das Kühlmittel.

In einer Ausführungsform des Verfahrens wird das erhitzte Kühlmittel zum Heizen des Fahrgastraums des Kraftfahrzeugs genutzt. In einer weiteren Ausführungsform des Verfahrens wird das erhitzte Kühlmittel zum Vorheizen eines Verbrennungsmotors des Kraftfahrzeugs genutzt. In einer Ausführungsform wird das erhitzte Kühlmittel sowohl zum Heizen des Fahrgastraums als auch zum Vorheizen eines Verbrennungsmotors genutzt.

Charakteristisch für das erfindungsgemäße Verfahren ist, dass über den Antrieb (E-Motor und Inverter) ein Fahrzeug durch Maximierung der elektrischen Verluste erwärmt wird, wobei kein unerwünschtes zusätzliches Drehmoment erzeugt wird, keine zusätzlichen Heizkomponenten (z.B. Heizwiderstände) erforderlich sind und die Heizfunktion im Standbetrieb oder im laufenden Betrieb möglich ist.

Es wird ein im Kraftfahrzeug vorhandener Elektromotor mit Inverter genutzt, welcher ohnehin in der Regel mit dem Kühlkreislauf verbunden ist. Beim Betrieb der E-Maschine werden, anders als bei Normalbetrieb beim Fahren, die Verluste maximiert und das resultierende Drehmoment minimiert. Über die Umwandlung elektrischer Energie in Wärme über den Antrieb (E-Motor und Inverter) werden Fahrzeug und/oder Fahrgastraum erwärmt.

Der Elektromotor wird für die Funktion der Standheizung in einem sehr unüblichen Betriebspunkt mit maximalen bzw. vorgebbaren Verlusten betrieben. Dabei wird über den Pulswechselrichter (Inverter) Strom in den Wicklungen des Elektromotors eingeprägt, was über die ohmschen Verluste in der Wicklung und die Schalt- und Durchlassverluste im Pulswechselrichter zur gewünschten Erwärmung führt. Diese Wärme wird über den Kühlmittelkreislauf abgeführt und kann den Verbrennungsmotor und gleichzeitig den Fahrgastraum heizen. Kühlsysteme elektrischer Antriebe können ca. 10% der Nennleistung eines elektrischen Antriebs abführen.

Zu den Vorteilen der Erfindung gehört, dass Kosten, Gewicht und Bauraum für die Funktion Standheizung eingespart werden. Gleichzeitig kann die Einbaurate von wenigen Prozent auf 100% erhöht werden, da keine zusätzliche Hardware nötig ist. So kann die Standheizungsfunktion bei Bedarf in allen Modellen einer Fahrzeugbaureihe verfügbar gemacht werden ("Function on demand").

Die Standheizung ermöglicht bei allen Fahrzeugen eine Vorkonditionierung des Fahrgastraums, was zu Komforterhöhung und bei niedrigen Temperaturen auch zu einem Sicherheitsgewinn durch freie Sicht führt. Bei Frost ist kein Freikratzen der Scheiben erforderlich, was zusätzlich in Zeitersparnis resultiert.

Bei Fahrzeugen mit Verbrennungskraftmaschine kann mit der Standheizung die Verbrennungskraftmaschine vorkonditioniert werden. Dadurch wird die Lebensdauer des Verbrenners erhöht, da Kaltstarts vermieden werden. Durch das Vorwärmen des Verbrennungsmotors sinkt der Kraftstoffverbrauch und die Emissionen werden im Vergleich zu einem Kaltstart reduziert.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung einer beispielhaften Ausführung eines Antriebssystems eines Hybridfahrzeugs;
- Figur 2: eine schematische Darstellung einer Ausführungsform des erfindungsgemäßen Standheizungssystems.

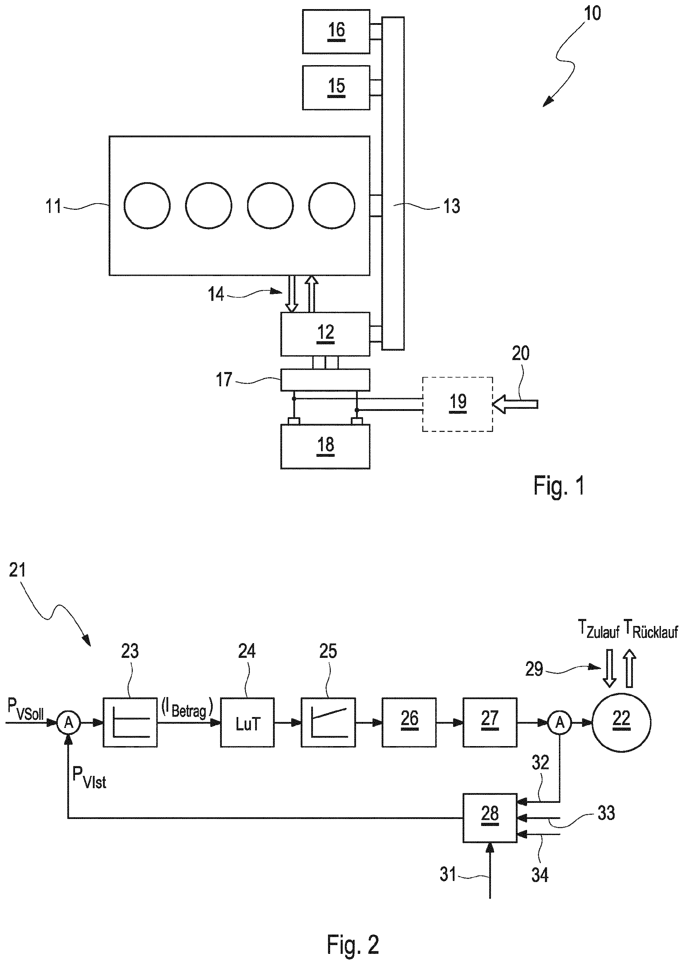

Figur 1 zeigt schematisch eine Ausführung eines Antriebssystems 10 eines Hybridfahrzeugs mit einem Verbrennungsmotor 11 und einem Elektromotor 12, die über einen Riementrieb 13 verbunden sind und an einen gemeinsamen Kühlmittelkreislauf 14 angeschlossen sind. Auch ein Klimakontrollgerät 15 und eine Kühlwasserpumpe 16 sind an den Riementrieb 13 angeschlossen. Der Elektromotor 12 ist über einen Inverter 17 an eine Batterie 18 angeschlossen. Über eine Ladeeinrichtung 19 ist eine Energiezuführung 20 von außen möglich. Der Elektromotor 12 kann dazu genutzt werden, das Kühlmittel im Kühlmittelkreislauf 14 zu erhitzen und den Verbrennungsmotor 11 und den Fahrgastraum zu heizen.

In Figur 2 ist eine beispielhafte Umsetzung eines Standheizungssystems 21 dargestellt. Dabei wird die Verlustleistung P_{V} eines Elektromotors 22 über eine Regeleinheit 23 auf den gewünschten Sollwert P_{VSoll} hin geregelt. Die im Elektromotor 22 erzeugte Verlustleistung erhitzt das Kühlmittel im Kühlmittelkreislauf 29 von einer Zulauftemperatur T_{Zulauf} auf eine Rücklauftemperatur T_{Rücklauf}. Der Istwert P_{VIst} wird über einen modellbasierten Ansatz unter Verwendung von Motor- und Endstufenparametern 31 in einem Verlustleistungsbeobachter 28 ermittelt, wobei gemessene oder geschätzte
- Temperaturen 32 im Stator und/oder Pulswechselrichter,
- Volumenströme 33 im Kühlmittelfluss und
- die gemessenen Ströme 34 der Regelung
verwendet werden können. Über eine Tabelle 24 werden die Ströme so einer Modulationseinheit 26 und einer nachgeschalteten Endstufe 27 vorgegeben, dass passend zum Ausgangswert des Verlustleistungsreglers 23 maximale Verluste entstehen. Dies kann z.B. durch einen positiven oder negativen d-Strom (flussbildend ohne Drehmomentbeitrag) erreicht werden. Diese werden über eine konventionelle feldorientierte Antriebsregelung (PI-Stromregler 25) eingeregelt.

Diese Ausführungsform hat den Vorteil, dass die Funktion der Standheizung auch im Fahrbetrieb aufrecht erhalten werden kann. Die dargestellte konkrete Implementierung beschreibt eine mögliche Umsetzungsvariante.

### Bezugszeichenliste

- 10: Antriebssystem
- 11: Verbrennungsmotor
- 12: Elektromotor
- 13: Riementrieb
- 14: Kühlmittelkreislauf
- 15: Klimakontrollgerät
- 16: Kühlwasserpumpe
- 17: Inverter
- 18: Batterie
- 19: Ladeeinrichtung
- 20: Energiezuführung
- 21: Standheizungssystem
- 22: Elektromotor
- 23: Verlustleistungsregler
- 24: Lookup- Tabelle (LuT)
- 25: PI-Stromregler
- 26: Modulationseinheit
- 27: Endstufe
- 28: Verlustleistungsbeobachter
- 29: Kühlmittelkreislauf
- 31: Motor- und Endstufenparameter
- 32: Temperaturen im Stator und/oder Pulswechselrichter
- 33: Volumenströme im Kühlmittelfluss
- 34: gemessene Ströme der Regelung

## Patentansprüche

1. Standheizungssystem (21) für ein Kraftfahrzeug mit einem elektrischen Antriebsstrang, umfassend mindestens einen Elektromotor (22), der an einen Kühlmittelkreislauf (29) des Kraftfahrzeugs angeschlossen ist, einen Verlustleistungsregler (23), der dafür eingerichtet ist, die Verlustleistung Pv des Elektromotors (22) auf einen Sollwert (P_{VSoll}) hin zu regeln, eine Lookup-Tabelle (24), eine feldorientierte Antriebsregelung (25), eine Modulationseinheit (26), eine Endstufe (27),
**gekennzeichnet durch** einen
Verlustleistungsbeobachter (28), der dafür eingerichtet ist, gemessene oder geschätzte Temperaturen (32) im Stator und/oder Pulswechselrichter des Elektromotors (22), und Volumenströme (33) im Kühlmittelkreislauf (29) und in dem vom Verlustleistungsregler (23) geregelten Stromkreis gemessene Ströme (34) zu verarbeiten und einen Istwert der Verlustleistung (P_{VIst}) des Elektromotors (22) zu ermitteln.

2. Standheizungssystem (21) nach Anspruch 1, bei dem das Kraftfahrzeug ein batterieelektrisches Fahrzeug (BEV) ist.

3. Standheizungssystem (21) nach Anspruch 1, bei dem das Kraftfahrzeug mindestens einen Verbrennungsmotor (11) umfasst.

4. Standheizungssystem (21) nach Anspruch 3, bei dem das Kraftfahrzeug ein Plug-in Hybridfahrzeug (PHEV), Hybridelektrofahrzeug (HEV), oder Mildhybridelektrofahrzeug (MHEV) ist.

5. Standheizungssystem (21) nach Anspruch 3 oder 4, welches an einen Kühlmittelkreislauf (14) eines Verbrennungsmotors (11) des Kraftfahrzeugs angeschlossen ist.

6. Verfahren zum Erhitzen eines Kühlmittels in einem Kühlmittelkreislauf (29) eines Kraftfahrzeugs mit einem elektrischen Antriebsstrang, der mindestens einen Elektromotor (22), welcher an den Kühlmittelkreislauf (29) angeschlossen ist, umfasst, umfassend das Betreiben des Elektromotors (22) an einem Betriebspunkt, an dem die Verlustleistung des Elektromotors (22) maximiert und das resultierende Drehmoment des Elektromotors (22) minimiert werden und die dadurch entstehende Wärme über den Kühlmittelkreislauf (29) abgeführt wird, **dadurch gekennzeichnet, dass** ein Istwert der Verlustleistung (P_{VIst}) über einen modellbasierten Ansatz unter Verwendung von Motor- und Endstufenparametern (31) in einem Verlustleistungsbeobachter (28) ermittelt wird, wobei gemessene oder geschätzte Temperaturen (32) im Stator und/oder Pulswechselrichter des Elektromotors (22), Volumenströme (33) im Kühlmittelfluss des Kühlmittelkreislaufs (29) und die gemessenen Ströme (34) der Regelung des Elektromotors (22) verwendet werden; und Ströme über eine Tabelle (24) ermittelt und einer Modulationseinheit (26) und einer nachgeschalteten Endstufe (27) vorgegeben werden, so dass passend zum Ausgangswert des Verlustleistungsreglers (23) maximale Verluste entstehen.

7. Verfahren nach Anspruch 6, bei dem das erhitzte Kühlmittel zum Heizen des Fahrgastraums des Kraftfahrzeugs genutzt wird.

8. Verfahren nach Anspruch 6 oder 7, bei dem das erhitzte Kühlmittel zum Vorheizen eines Verbrennungsmotors (11) des Kraftfahrzeugs genutzt wird.

## Claims

1. Auxiliary heating system (21) for a motor vehicle with an electric drive train, comprising at least one electric motor (22) that is connected to a coolant circuit (29) of the motor vehicle, a power loss controller (23) that is adapted to adjust the power loss Pv of the electric motor (22) to a desired value (Pvsoll), a look-up table (24), a field-oriented drive controller (25), a modulation unit (26), an output stage (27), **characterised by** a power loss monitor (28) that is adapted to process measured or estimated temperatures (32) in the stator and/or pulse width modulation inverter of the electric motor (22), and volume flows (33) in the coolant circuit (29) and flows (34) measured in the flow circuit controlled by the power loss controller (23) and to determine an actual value of the power loss (Pvlst) of the electric motor (22).

2. Auxiliary heating system (21) according to claim 1, in which the motor vehicle is a battery electric vehicle (BEV).

3. Auxiliary heating system (21) according to claim 1, in which the motor vehicle comprises at least one combustion engine (11).

4. Auxiliary heating system (21) according to claim 3, in which the motor vehicle is a plug-in hybrid vehicle (PHEV), hybrid electric vehicle (HEV) or mild hybrid electric vehicle (MHEV).

5. Auxiliary heating system (21) according to claim 3 or 4, which is connected to a coolant circuit (14) of a combustion engine (11) of the motor vehicle.

6. Method for heating a coolant in a coolant circuit (29) of a motor vehicle with an electric drive train, which comprises at least one electric motor (22) that is connected to the coolant circuit (29), comprising the operation of the electric motor (22) at an operating point at which the power loss of the electric motor (22) is maximised and the resulting torque of the electric motor is minimised and the resulting heat is dissipated via the coolant circuit (29), **characterised in that** an actual value of the power loss (P_{VIst}) is determined via a model-based approach using motor and output stage parameters (31) in a power loss monitor (28), wherein measured or estimated temperatures (32) in the stator and/or pulse width modulation inverter of the electric motor (22), volume flows (33) in the coolant flow of the coolant circuit (29) and the measured flows of the control of the electric motor (22) are used; and flows are determined via a table (24) and specified to a modulation unit (26) and a downstream output stage (27), so that maximum losses are produced to match the output value of the power loss controller (23).

7. Method according to claim 6, in which the heated coolant is used for heating the passenger compartment of the motor vehicle.

8. Method according to claim 6 or 7, in which the heated coolant is used for preheating of a combustion engine (11) of the motor vehicle.

## Revendications

1. Système de chauffage auxiliaire (21) pour un véhicule automobile avec une chaîne cinématique électrique, comprenant au moins un moteur électrique (22) qui est raccordé à un circuit de réfrigérant (29) du véhicule automobile, un régulateur de dissipation de puissance (23) qui est configuré pour réguler la dissipation de puissance Pv du moteur électrique (22) sur une valeur de consigne (Pvsoll), une table de correspondance (24), une régulation d'entraînement à champ orienté (25), une unité de modulation (26), un étage final (27), **caractérisé par** un observateur de dissipation de puissance (28) qui est configuré pour traiter des températures mesurées ou estimées (32) dans le stator et/ou l'onduleur à impulsions du moteur électrique (22), et des débits volumétriques (33) dans le circuit de réfrigérant (29) et des courants mesurés (34) dans le circuit électrique régulé par le régulateur de dissipation de puissance (23), et pour déterminer une valeur réelle de la dissipation de puissance (Pvlst) du moteur électrique (22).

2. Système de chauffage auxiliaire (21) selon la revendication 1, dans lequel le véhicule automobile est un véhicule électrique à batterie (BEV).

3. Système de chauffage auxiliaire (21) selon la revendication 1, dans lequel le véhicule automobile comprend au moins un moteur à combustion (11).

4. Système de chauffage auxiliaire (21) selon la revendication 3, dans lequel le véhicule automobile est un véhicule hybride plug-in (PHEV), un véhicule électrique hybride (HEV) ou un véhicule électrique hybride léger (MHEV).

5. Système de chauffage auxiliaire (21) selon la revendication 3 ou 4, lequel est raccordé à un circuit de réfrigérant (14) d'un moteur à combustion (11) du véhicule automobile.

6. Procédé de chauffage d'un réfrigérant dans un circuit de réfrigérant (29) d'un véhicule automobile avec une chaîne cinématique électrique, qui comprend au moins un moteur électrique (22), lequel est raccordé au circuit de réfrigérant (29), comprenant le fonctionnement du moteur électrique (22) à un point de fonctionnement auquel la dissipation de puissance du moteur électrique (22) est maximisée et le couple résultant du moteur électrique (22) est minimisé et la chaleur ainsi produite est évacuée par le circuit de réfrigérant (29), **caractérisé en ce qu'**une valeur réelle de la dissipation de puissance (P_{VIst}) est déterminée par l'intermédiaire d'une approche basée sur un modèle en utilisant des paramètres de moteur et d'étage final (31) dans un observateur de dissipation de puissance (28), dans lequel des températures mesurées ou estimées (32) dans le stator et/ou l'onduleur à impulsions du moteur électrique (22), des débits volumétriques (33) dans le flux de réfrigérant du circuit de réfrigérant (29) et les courants mesurés (34) de la régulation du moteur électrique (22) sont utilisés ; et des courants sont déterminés par l'intermédiaire d'un tableau (24) et prédéterminés à une unité de modulation (26) et à un étage final (27) monté en aval, de sorte que des pertes maximales adaptées à la valeur initiale du régulateur de dissipation de puissance (23) se produisent.

7. Procédé selon la revendication 6, dans lequel le réfrigérant chauffé est utilisé pour chauffer l'habitacle du véhicule automobile.

8. Procédé selon la revendication 6 ou 7, dans lequel le réfrigérant chauffé est utilisé pour préchauffer un moteur à combustion (11) du véhicule automobile.
